# EUROPEAN PATENT APPLICATION

(11) **EP 1 350 422 A1**
(43) Date of publication of application: **08.10.2003**
(21) Application number: 02425208.2
(22) Date of filing: 05.04.2002
(51) Int. Cl.: A01D 46/26, A63B 47/00

(54) **Mechanized system for collecting olives or the like**

(71) Applicant: Di Camillo, Lorenzo, 03040 San Vittore del Lazio (IT); Spacagna, Aldo, 03044 Cervaro FR (IT); Top Service di Di Rocco Marcello & C. s.a.s., 81014 Capriati a Volturno CE (IT)
(72) Inventor: Di Camillo, Lorenzo, 03040 San Vittore del Lazio FR (IT)
(74) Representative: Leone, Mario

(57) **Abstract**

Mechanized system (1) for collecting olives (21) or the like from a tree (22), comprising a machine (10) apt to throw spherical bodies (20), operable by an operator, to cause the fall of the olives (21) from the tree (22) and conveying means (6, 7, 8, 9, 24, 15), apt to collect the fallen olives (21) and to sort out said olives (21) from said spherical bodies (20).

## Description

The present invention refers to a system for the mechanized collecting of olives or the like.

Olive collecting is an operation that typically entails remarkable difficulties, and that at the same time should be carried out according to definite rules and within final deadlines, lest the product quality suffer or, at worst, the harvest be lost.

A first known collecting technique is that providing olive handpicking, surely enabling to abate plant and fruit damage to a minimum, and to sort out the fruits to be collected with respect to those still unripe.

However, handpicking entails remarkable drawbacks in terms of efficiency (expressed as Kg. of collected olives in the time unit), number of pickers required, practical difficulties related to the need to climb trees by ladders, etc.

In order to overcome said drawbacks, at least on an industrial scale, mechanized collecting methods are exclusively resorted to, of course enabling a higher efficiency and a greater cost-effectiveness in terms of personnel employed.

Two types of mechanized collecting systems are known. A first type of systems is substantially based on the application of a vibration to the tree trunk or to the individual branches. Due to said vibration, ripe olives fall to the ground and can be collected.

A second type of systems provides the use of mechanic or pneumatic apparatuses to beat the foliage, e.g., by combs or other devices, so as to knock the ripe olives down to the ground.

However, also these mechanized collecting systems entail several drawbacks and fail to optimize the collecting process.

Some problems of said known systems are related to the damages borne therefrom to the plants, and above all to the olives and to the need to collect olives from the ground, with the entailed wastes and losses.

Moreover, the above systems do not allow very high collecting rates and are often toilsome to the operators, thereby requiring more personnel. In fact, normally the devices utilized are quite heavy, mostly since they need to be quite high in order to reach treetops. Alternatively, the operators should be climbing on ladders in order to work, with a remarkable increase of the risk of accidents.

Object of the present invention is to provide a mechanized system for collecting olives or the like from a tree, characterised in that it comprises:
- a machine apt to throw spherical bodies, operable by an operator, to cause the falling of the olives from the tree; and
- conveying means, apt to collect the fallen olives and to sort out said olives from said spherical bodies.

A further object of the present invention is to provide a machine for throwing spherical bodies characterised in that it comprises:
- a machine body;
- a lance, provided with a handgrip and comprising one or more barrels;
- a flexible union for connecting said lance to the machine body;
- means for propelling air to be inletted in said one or more barrels; and
- automated loading means of said one or more barrels.

The main advantage of the system according to the present invention is that it in no way damages the plant nor the collected fruits, thereby allowing to attain a final product (oil) of a very high quality.

A second advantage lies in the elevated efficiency attainable with the system according to the present invention. In fact, this abates the collecting times, thereby enabling an improved harvest optimization, also in view of the production of oil. In fact, the production of extra-virgin olive oil is substantially related to the possibility of collecting olives at the right ripening stage, and this, on a large scale, is viable solely with a system providing high collecting rates.

A third advantage of the present invention is that the final collecting of the fallen olives is not manual, nor is it carried out on the ground, but it is automated, thereby avoiding any type of loss and the need of personnel intervention other than that of the machine operator.

A further advantage is entailed in the working conditions provided to the operators that will not be forced to lenghty uses of heavy devices or to bend down to the ground in order to collect the olives.

The process is entirely automated, and an individual operator substantially can carry it out, in total safety.

For simplicity's sake, hereinafter reference will still be made to olive collecting. However, it is understood that the system according to the present invention is also apt to collect other fruit types for which the same problems hereto disclosed might subsist, and for which the use of the system according to the present invention would entail likewise advantages.

Further advantages, features and modes of employ of the present invention will be made apparent in the following detailed description of preferred embodiments thereof, given by way of a non-limiting example, making reference to the figures of the attached drawings, wherein:
figure 1 is a view of a first embodiment of a collecting system according to the present invention;
figure 2 is a top plan view of the system of figure 1;
figure 3 is a sectional view of the system of figure 1 taken along line A-A;
figure 4 is a view of a second embodiment of a collecting system according to the present invention;

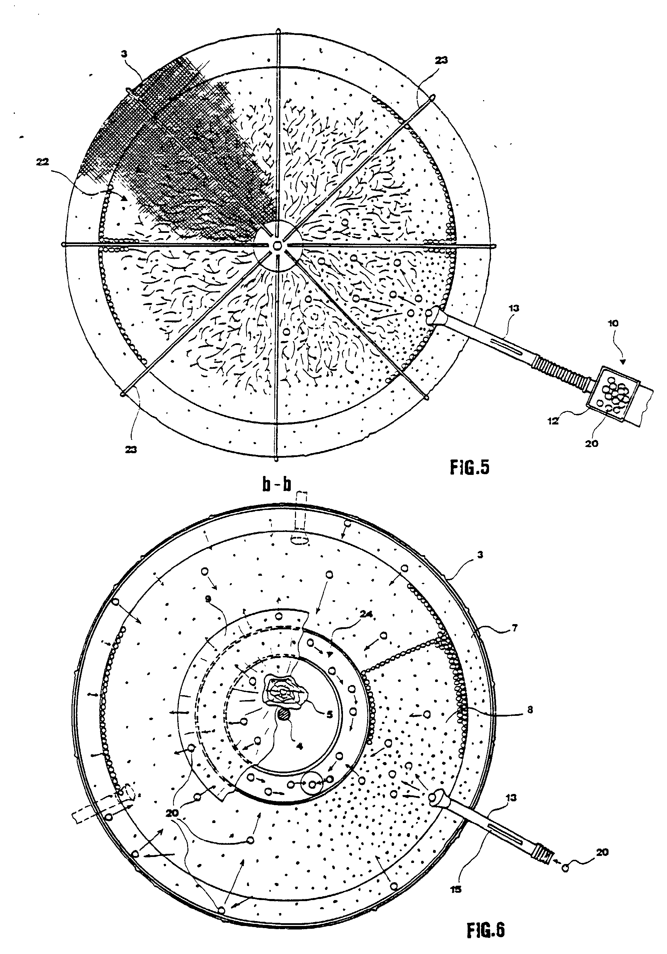

figure 5 is a top plan view of the system of figure 4;
figure 6 is a sectional view of the system of figure 4 taken along line B-B;
figure 7 is a partially exploded perspective view of a machine for throwing balls according to the present invention; and
figure 8 is a sectional view of a detail of the machine of figure 7.

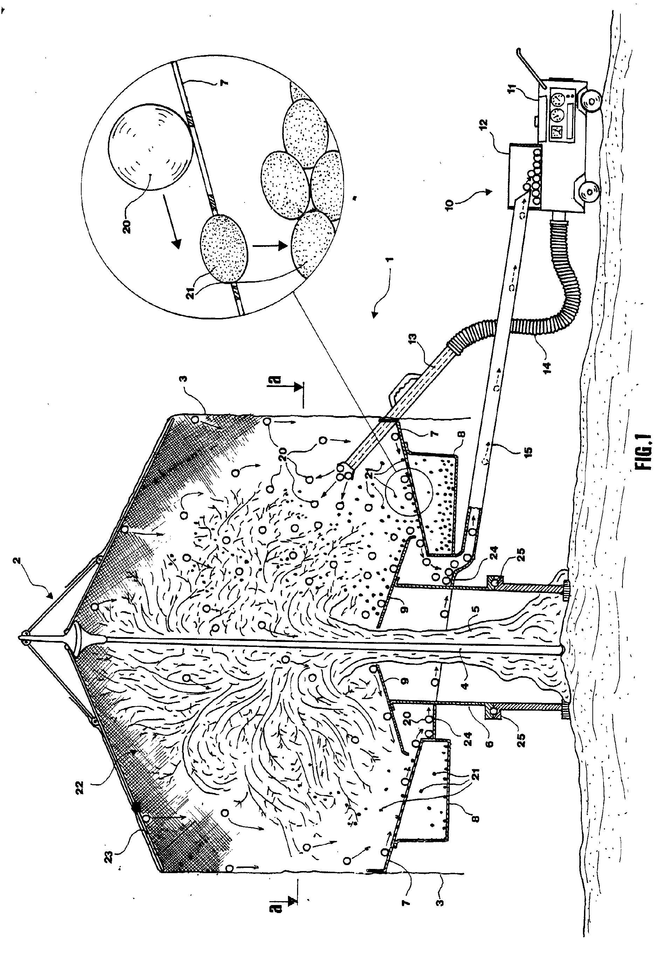

With initial reference to figure 1, it is an overall view of a mechanized system for collecting olives or the like according to the present invention.

A mechanized system 1 for collecting olives 21 from a tree 22 comprises first of all covering means 2 of the tree 22. These covering means 2 comprises a substantially umbrella-shaped structure having a standard 4 apt to be secured to the trunk 5 of the tree 22. Advantageously, the standard 4 is of an extensible type, e.g., telescopic or modular, so as to be easily adjustable to the height of the tree 22.

To the top of the standard 4 some rods 23 are hinged, apt, when opened, to support a mesh 3 entirely covering the top section of the tree 22 and coming down to delimit a collecting region thereabout. Alternatively, the covering structure could needwise be implemented according to other modes, e.g. gazebo-like.

The system 1 further comprises a machine 10 apt to throw a plurality of balls 20. The machine 10, that will be detailed hereinafter, is apt to throw spherical bodies 20, e.g., balls of rubber or of another material, against the foliage of the tree 22, with speeds and rates predetermined needwise.

Experimental tests highlighted that the machine 10 can be sized so as to easily throw up to 2000 balls/min.

The balls 20, knocking against the branches of the tree and/or directly against the olives 21, cause the falling of the latter, without anyhow damaging them and/or the tree.

The system 1 further comprises conveying means 6, 7, 8, 9, 24, 15 of the fallen olives 21.

Said conveying means comprises a supporting structure 6, e.g. a metal frame apt to support a funnel-shaped structure 7, located about the tree 22.

The funnel-shaped structure 7 has a perforated (open-work) surface, e.g. implemented with a wire mesh, whose holes are dimensioned so as to let the olives 21 but not the balls 20 therethrough. Of course, said balls will be selected of a suitable diameter.

This embodiment is shown in the detail of Figure 1.

Hence, the olives 21 could be collected in one or more collecting chests 8 located below the funnel-shaped structure 7.

The balls 20 will instead continue to flow along the funnel 7, ending up in a collecting ring 24, located about the tree 22 and in turn slanting so as to have all the balls 20 converge on an outlet duct 15 returning them towards the throwing machine 10.

According to the preferred embodiment, the supporting structure 6 is revolvingly mounted about the tree 22. A sliding bearing mechanism 25 attains this functionality. Thus, an operator could freely move about the tree 22, concomitantly shifting the machine 10, and thereby working on all sides of the tree 22.

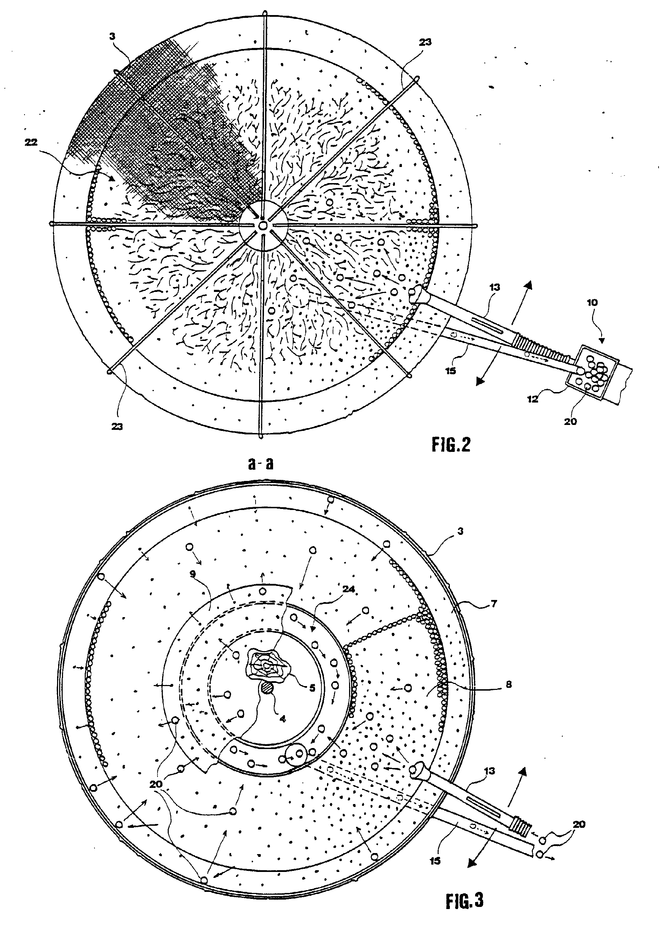

Next, Figure 2 is a top plan view of the system 1 according to the present invention, whereas Figure 3 is a sectional view taken along line A-A of Figure 1.

The conveying means further comprises a covering member 9 of the region directly proximal to the trunk 5 of the tree 22.

The covering member 9 is substantially frustoconical, with a surface slanting so that the olives 21, and also the balls 20, may roll until falling onto the collecting surface 7 serving as olive/ball separating means.

Advantageously, the covering member 9 could be secured to the tree trunk 4, or, needwise, directly secured to the supporting structure 6.

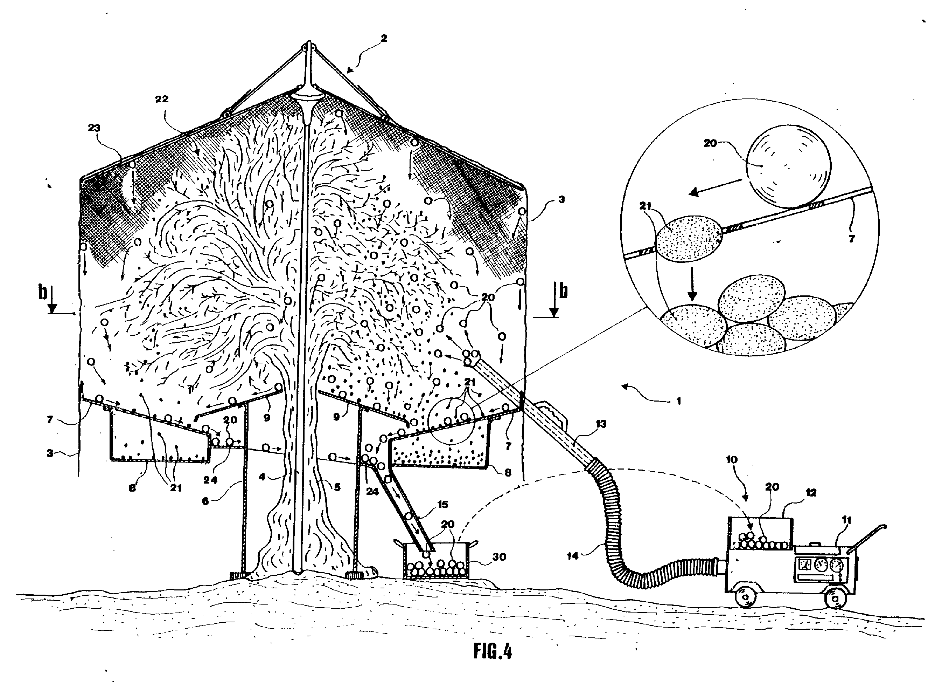

Figure 4 is an overall view of a second embodiment of a system according to the present invention.

According to such second embodiment, the supporting structure 6 is not revolvingly mounted about the trunk 5.

Moreover, the outlet duct 15 of the balls 20 is not apt to return the balls towards the throwing machine 10, ending instead into a collecting container 30. The operator should reload the tank 12 of the machine 10 needwise.

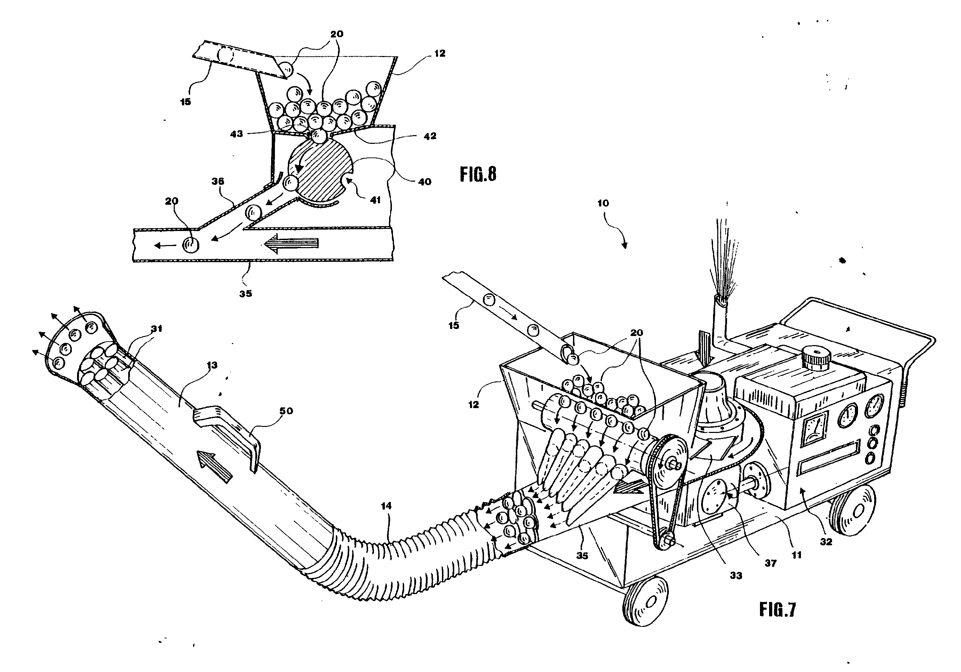

In this case, in order to operate on different sides of the tree, the operator should shift the machine 10, without revolving the entire structure, and use the machine 10 through ports, not shown in the figures, specifically provided in the covering mesh 3, as it is shown in the next figure 6.

Figure 7 is instead a partially exploded perspective view of a machine 10 for throwing rubber balls 20.

The machine 10 comprises a lance 13 provided with a handgrip 50.

The lance 13 in turn comprises one or more barrels 31, each one having a diameter apt to let a ball 20 therethrough.

The lance 13 is connected to the body 11 of the machine 10 by a flexible union 14, so as to enable an easy shifting of the lance 13 by the operator.

Preferably, the machine 10 is based on an air-throwing, optionally compressed air-throwing system.

A motor or engine 32 powers a turbine or fan wheel 33.

The wheel sucks air from the outside and inlets it, optionally compressed, into the barrels of the lance 13.

Figure 8 is a sectional view of a detail of the machine 10, detailing an embodiment of the loading region of one of the barrels of the lance 13.

The arrow F1 indicates the direction of provenance of the air inletted in the barrel section 35 by the wheel 33.

The balls 20 are fed, by an automated loading system, via a duct 36, slantingly connected with respect to the barrel section 35.

The air passing in the barrel 35 generates a negative pressure in the duct 36 that eases the infeed of the ball 20 therein.

The loading system comprises a tank 12 wherein the balls 20 to be thrown are contained.

Onto the bottom 42 of the tank 12 there is an opening 43 faced by a revolving roll 40 driven by the same motor (engine) 32.

The roll 40 has an array of seats 41, each seat being apt to receive a ball 20 outletted from the tank 12.

The revolving of the roll brings the balls taken thereby at the inlet of the duct 36, from which they are substantially sucked in and then thrown through the barrel section 35.

The machine 10 comprises means for adjusting the revolving rate of the roll 40 e.g. a mechanic or electronic reduction gear, in order to attain a desirable throwing rate.

Hereto, the present invention has been described according to preferred embodiments thereof, given by way of a non-limiting example.

It is understood that other embodiments of the invention may be provided, all however to be construed as falling within the protective scope thereof, as defined by the appended claims.

## Claims

1. A mechanized system (1) for collecting olives (21) or the like from a tree (22), **characterised in that** it comprises:
- a machine (10) apt to throw spherical bodies (20), operable by an operator, to cause the fall of the olives (21) from the tree (22); and
- conveying means (6, 7, 8, ,9, 24, 15), apt to collect the fallen olives (21) and to sort out said olives (21) from said spherical bodies (20).

2. The system according to claim 1, wherein said spherical bodies (20) are rubber balls.

3. The system according to claim 1 or 2, further comprising covering means (2) of the tree (22).

4. The system according to claim 3, wherein said covering means comprises an umbrella-shaped structure (2) .

5. The system according to claim 4, wherein said umbrella-shaped structure (2) comprises an extensible standard (4).

6. The system according to claim 5, wherein said extensible standard (4) is telescopic.

7. The system according to claim 5, wherein said extensible standard (4) is modular.

8. The system according to any one of the claims 5 to 7, wherein said umbrella-shaped structure (2) comprises one or more rods (23) hinged to the top of said standard (4) .

9. The system according to claim 3, wherein said covering means comprises a gazebo-like structure.

10. The system according to any one of the claims 3 to 9, wherein said covering means comprises a mesh (3) apt to cover the tree (22) and to delimit a collecting region around said tree (22).

11. The system according to any one of the preceding claims, wherein said conveying means (6, 7, 8, 9, 24, 15) comprises a supporting structure (6).

12. The system according to claim 11, wherein said supporting structure (6) is a metal frame apt to be connected at the base of the tree (22).

13. The system according to claim 11 or 12, wherein said structure (6) is revolvingly mounted around the tree (22) .

14. The system according to any one of the claims 11 to 13, wherein said conveying means (6, 7, 8, 9, 24, 15) comprises a funnel-shaped structure (7) apt to be mounted on said supporting structure (6).

15. The system according to claim 14, wherein said funnel-shaped structure (7) has a perforated surface slanting towards the trunk (5) of the tree (22).

16. The system according to claim 15, wherein said perforated surface is implemented with a wire mesh having holes dimensioned so as not to let said spherical bodies (20) therethrough.

17. The system according to any one of the preceding claims, wherein said conveying means (6, 7, 8, 9, 24, 15) comprises a covering member (9) apt to cover a region around the trunk (5) of the tree (22).

18. The system according to claim 17, wherein said covering member (9) is substantially frustoconical.

19. The system according to any one of the preceding claims, wherein said conveying means (6, 7, 8, 9, 24, 15) comprises one or more collecting chests (8), located below said funnel-shaped structure (7), each chest being apt to contain olives (21).

20. The system according to any one of the preceding claims, wherein said conveying means (6, 7, 8, 9, 24, 15) comprises a collecting ring (24), substantially located around the tree (22) and connected to the supporting structure (6), said collecting ring (24) being apt to receive the spherical bodies (20).

21. The system according to claim 20, wherein said collecting ring (24) has a slanting surface.

22. The system according to claim 20 or 21, wherein said conveying means (6, 7, 8, 9, 24, 15) comprises an outlet duct (15) of the spherical bodies (20) from said collecting ring (24).

23. The system according to claim 22, wherein said outlet duct (15) is apt to return the collected spherical bodies (20) towards said machine (10).

24. A machine (10) for throwing spherical bodies (20) **characterised in that** it comprises:
- a machine body (11);
- a lance (13) provided with a handgrip (30) comprising one or more barrels (31);
- a flexible union (14) for connecting said lance (13) to the machine body (11);
- means (32, 33, 37) for propelling air to be inletted in said one or more barrels (31); and
- automated loading means (12, 35, 36, 40, 41) of said one or more barrels (31).

25. The machine according to claim 24, wherein said spherical bodies (20) are rubber balls.

26. The machine according to claim 25, wherein each barrel of said one or more barrels (31) has an inside diameter apt to let a ball (20) therethrough.

27. The machine according to any one of the claims 24 to 26, wherein said means (32, 33, 37) for propelling air comprises a motor (32).

28. The machine according to claim 27, wherein said motor is an explosion engine.

29. The machine according to claim 27, wherein said motor is an electric motor.

30. The machine according to any one of the claims 24 to 29, wherein said means (32, 33, 37) for propelling air comprises a wheel (33).

31. The machine according to any one of the claims 24 to 30, wherein said means (32, 33, 37) are apt to propel compressed air.

32. The machine according to any one of the claims 24 to 31, wherein said automated loading means (12, 35, 36, 40, 41) comprises a tank (12) apt to contain a plurality of said spherical bodies (20) to be thrown.

33. The machine according to claim 32, wherein said tank (12) has an opening (43) onto the bottom (42).

34. The machine according to claim 33, wherein said automated loading means (12, 35, 36, 40, 41) comprises a roll (40) faced on said opening (43).

35. The machine according to claim 34, wherein said roll (40) is driven by said motor (32).

36. The machine according to claim 34 or 35, wherein said roll (40) has one or more seats (41), each seat (41) being apt to receive a spherical body (20) outletted from the tank (12) and to position said spherical body (20) at a duct (36) slantingly connected to a section (35) of the barrel (31), said barrel section (35) being apt to inlet air.

37. The machine according to claim 36, comprising means for adjusting the revolving rate of the roll (40).
